(19) Europäisches Patentamt
European Patent Office
Office européen des brevets

(11) **EP 2 059 030 B1**

(12) **FASCICULE DE BREVET EUROPEEN**

(45) Date de publication et mention
de la délivrance du brevet:
**19.01.2011 Bulletin 2011/03**

(51) Int Cl.:
*H04N 5/33* (2006.01)  *H04N 5/217* (2011.01)

(21) Numéro de dépôt: **08167221.4**

(22) Date de dépôt: **22.10.2008**

(54) **Capteur d'image thermique matriciel à pixel bolométrique et procédé de réduction de bruit spécial**

Thermischer Matrixbildsensor mit bolometrischen Pixeln und Verfahren zur Reduzierung von speziellen Geräuschen

Bitmap thermal image sensor with bolometric pixel and special noise-reduction method

(84) Etats contractants désignés:
**AT BE BG CH CY CZ DE DK EE ES FI GB GR HR HU IE IS IT LI LT LU LV MC MT NL NO PL PT RO SE SI SK TR**

(30) Priorité: **23.10.2007 FR 0707418**

(43) Date de publication de la demande:
**13.05.2009 Bulletin 2009/20**

(73) Titulaire: **Commissariat à l'Énergie Atomique et aux Énergies Alternatives
75015 Paris (FR)**

(72) Inventeur: **Chamming's, Gilles
38100 Grenoble (FR)**

(74) Mandataire: **Guérin, Michel et al
Marks & Clerk France
Conseils en Propriété Industrielle
Immeuble " Visium "
22, avenue Aristide Briand
94117 Arcueil Cedex (FR)**

(56) Documents cités:
**EP-A- 1 431 731         US-A- 5 756 999
US-A1- 2003 213 910**

**Description**

L'invention concerne les capteurs d'image thermique matriciels de type bolométrique, dans lesquels chaque pixel comprend une résistance bolométrique dont la valeur varie en fonction du flux thermique reçu par le pixel.

Les pixels sont organisés en lignes et colonnes et la matrice est adressable ligne par ligne. Un circuit de lecture de signal est associé à chaque colonne de pixels et il y a autant de circuits de lecture qu'il y a de colonnes. Les signaux lus sur chaque colonne pendant l'adressage d'une ligne correspondent à la lecture des pixels de cette ligne ; ils sont mémorisés puis sont extraits de la matrice par un multiplexeur pendant que commence la lecture de la ligne suivante.

Pendant l'adressage d'une ligne, on applique à la résistance bolométrique une tension de polarisation, mais la valeur de la résistance bolométrique varie en fonction de sa température ; la température dépend de la tension de polarisation d'une part, et du flux thermique reçu par le pixel d'autre part ; il en résulte que le courant parcourant la résistance a une composante de mode commun et une composante qui dépend du flux thermique reçu par le pixel.

Un courant de compensation est en général soustrait du courant parcourant la résistance bolométrique afin de réduire ou éliminer la composante de mode commun du courant. Le courant de compensation est par exemple égal au courant parcourant la résistance bolométrique lorsqu'elle reçoit un flux thermique moyen ; de cette manière le courant différentiel résultant de la soustraction varie en positif ou en négatif selon que le flux thermique varie au-dessus ou au-dessous du flux thermique moyen. Le flux thermique moyen peut être par exemple le flux qui serait reçu par le pixel en provenance d'un corps noir à la température ambiante.

Le courant résiduel issu de la soustraction est transmis à un circuit de lecture associé à la colonne dans laquelle se situe le pixel, et ce courant est intégré dans une capacité d'intégration faisant partie du circuit de lecture ; cette intégration produit une tension électrique représentant le flux thermique reçu par le pixel pendant la durée d'intégration. La durée d'intégration est légèrement inférieure à la durée d'adressage de la ligne considérée. Typiquement, si la durée d'adressage dure 64 microsecondes, la durée d'intégration peut-être de 50 microsecondes.

A la fin de la durée d'intégration qui est commune à tous les pixels de la ligne adressée, on stocke la valeur du signal de sortie du circuit de lecture, par exemple en déversant les charges ou une fraction des charges de la capacité d'intégration dans une capacité de stockage associée au circuit de lecture de la colonne considérée.

Pendant que se déroule le processus d'adressage de la ligne suivante, on extrait des capacités de stockage l'ensemble des signaux stockés, par exemple à l'aide d'un multiplexeur analogique qui fournit successivement sur un bus de sortie de la matrice tous les signaux qui ont été stockés sur les capacités de stockage et qui correspondent aux pixels de la ligne qui vient d'être lue. On pourrait aussi envisager que le circuit de lecture comprenne un convertisseur analogique-numérique pour convertir la tension lue en numérique. Dans ce cas, le multiplexeur est bien entendu numérique.

Un problème critique rencontré avec les matrices à pixels bolométriques est la grande dispersion technologique des valeurs des résistances, qui induit une grande dispersion des réponses en présence d'une illumination thermique uniforme. Sur une même matrice, on rencontrera par exemple des résistances qui, à 300°K, auront des valeurs de 450 kilohms à 550 kilohms pour une valeur nominale théorique de 500 kilohms à cette température, soit une dispersion de plus ou moins 10%.

Etant donné que la variation de résistance dans la gamme utile d'illumination thermique n'est guère que de quelques kilohms, on conçoit que cette dispersion de plusieurs dizaines de kilohms au départ puisse être très gênante ; en effet, les signaux extraits de la matrice représenteront alors plus la dispersion technologique de fabrication des résistances bolométriques que l'image thermique qu'on veut détecter. L'image est donc noyée dans un bruit spatial fixe très important qui la rend illisible.

C'est pourquoi on a proposé dans l'art antérieur

- de déterminer numériquement le bruit spatial fixe pendant une phase de calibrage,
- puis, en dehors de la phase de calibrage, de soustraire ce bruit des signaux utiles.
  Le traitement des signaux est numérique. Pendant la phase de calibrage, la réponse de chaque pixel est déterminée en valeur numérique en présence d'une illumination thermique uniforme. La différence entre la réponse d'un pixel et une réponse théorique souhaitée (qui pourrait être la moyenne des réponses de tous les pixels) est, ultérieurement, systématiquement soustraite de la réponse du pixel. Il s'agit d'une correction additive individuelle des signaux numérisés issus de chaque pixel.
  Si on veut améliorer la suppression du bruit spatial, on fait en outre une correction multiplicative : on éclaire tous les pixels par une deuxième illumination thermique uniforme, différente de la première. On en déduit pour chaque pixel une pente générale de variation de la réponse (déjà corrigée en niveau par la correction additive) en fonction du flux thermique. Et on corrige ensuite le signal issu de chaque pixel de telle manière que la pente de variation du signal doublement corrigé (additivement et multiplicativement) soit la même pour tous les pixels.
  Cette double correction est cependant lourde à mettre en oeuvre et, en pratique, dans l'art antérieur publié, elle est mise en oeuvre par un calculateur qui reçoit les images du capteur et qui les retraite entièrement pour en éliminer le bruit spatial ; le coût en puissance de calcul est considérable.

On propose selon l'invention de modifier le capteur matriciel d'une manière qui permette de réduire ou même éliminer le bruit spatial avant l'extraction des signaux de la matrice de manière qu'il ne soit pas nécessaire de retraiter numériquement les signaux issus de l'imageur thermique.

Pour cela, on propose selon l'invention un capteur d'image thermique matriciel selon la revendication 1.

La capacité d'ajustement recevra donc une tension d'ajustement qui est spécifique pour chaque pixel, et elle la conservera pendant l'utilisation du capteur jusqu'à ce qu'une nouvelle valeur lui soit appliquée.

L'invention concerne aussi un procédé de réduction de bruit spatial fixe selon la revendication 10.

La tension d'ajustement peut être élaborée pendant une phase de calibrage pendant laquelle la matrice reçoit une illumination thermique uniforme, et pendant laquelle on établit sur les capacités d'ajustement des tensions telles que tous les pixels fournissent un même signal de sortie pour cette valeur d'illumination uniforme. Ainsi, la capacité d'ajustement conservera, pour chaque pixel, le niveau de correction de sensibilité qui convient pour ce pixel. Cette phase de calibrage peut être faite une fois pour toutes ou périodiquement. Après la phase de calibrage utilisant une image fixe à température uniforme, on peut figer la valeur d'ajustement déterminée pour chaque pixel, mais on peut aussi, comme on le verra, autoriser une évolution en fonction des images reçues en utilisation normale. Dans le premier cas, on prévoit des moyens pour autoriser le fonctionnement de la boucle de contre-réaction (c'est-à-dire l'action sur la charge de la capacité d'ajustement) pendant une phase de calibrage et pour l'interdire pendant une phase d'utilisation suivant une phase de calibrage. Dans le deuxième cas, la boucle de contre-réaction fonctionne tout le temps.

Si on utilise une phase de calibrage avec une source thermique fournissant un éclairement uniforme de tous les pixels, on peut de préférence procéder par une méthode progressive avec une constante de temps de quelques secondes (plusieurs dizaines d'images). Dans ce cas, la tension analogique VS est mesurée cycliquement pendant la phase de calibrage et la quantité de charges ajoutée à la capacité d'ajustement est une petite quantité de charges telle que le circuit d'ajustement modifie d'un pourcentage faible, de préférence inférieur à 10%, la différence de tension VS-Vgris fournie par le pixel pour un éclairement donné, Vgris étant une valeur de tension de référence correspondant à la tension analogique fournie par un pixel ayant la sensibilité désirée pour tous les pixels pour l'éclairement moyen de la source thermique servant au calibrage.

On peut aussi ne pas utiliser de phase de calibrage et utiliser seulement un asservissement de la tension d'ajustement, avec une constante de temps longue de telle manière que la tension d'ajustement tende progressivement à aligner la sensibilité du pixel sur une valeur moyenne qui, pour des raisons statistiques, sera la même pour tous les pixels après un grand nombre d'images.

Par constante de temps longue on entend une durée de lecture d'au moins cent images successives, de préférence plusieurs centaines d'images successives.

Dans ce cas, la tension analogique VS est mesurée au cours de l'utilisation normale du capteur et la quantité de charges ajoutée à la capacité d'ajustement est une petite quantité de charges telle que le circuit d'ajustement modifie d'un pourcentage encore plus faible, de préférence inférieur à 1%, la différence de tension VS-Vgris fournie par le pixel pour un éclairement donné, Vgris étant une valeur de tension de référence correspondant à la tension analogique fournie par un pixel ayant la sensibilité désirée pour tous les pixels pour un éclairement moyen.

Enfin, on peut utiliser à la fois une phase de calibrage à constante de temps courte, avec un écran uniforme, pour s'approcher rapidement d'un état où tous les pixels ont la même sensibilité, puis un asservissement à constante de temps longue qui utilise les images successives reçues par le capteur en utilisation normale pour continuer à régler la tension d'ajustement de chaque pixel dans un sens tendant à aligner la sensibilité du pixel sur une valeur moyenne commune à tous les pixels.

De préférence, la valeur ajustée par le circuit d'ajustement de sensibilité est la valeur Vpol, c'est-à-dire la tension de polarisation analogique appliquée à la résistance bolométrique pendant l'adressage de la ligne ; le circuit d'ajustement de sensibilité est alors propre au pixel, et la capacité d'ajustement, de même que le circuit d'ajustement de sensibilité, est localisée géographiquement dans le pixel lui-même.

Le circuit d'ajustement de sensibilité comprend de préférence un transistor monté en suiveur de tension, dont la source est reliée à la résistance bolométrique et dont la grille est reliée à la capacité d'ajustement.

La résistance bolométrique est de préférence reliée entre la source du transistor et un potentiel fixe commun à tous les pixels de la matrice. Le drain du transistor est relié, par un interrupteur d'adressage de ligne, à un conducteur de colonne auquel est appliqué le courant de compensation (Icomp).

En pratique on peut prévoir les dispositions suivantes : la tension analogique VS fournie par le circuit de lecture est stockée dans une capacité de stockage et la boucle de contre-réaction comprend une capacité de référence commune aux pixels de la colonne considérée, des moyens pour précharger cette capacité à une valeur de tension déterminée, des moyens pour ajouter à cette capacité de référence une charge représentative de l'écart entre cette tension déterminée et la tension analogique VS fournie par le circuit de lecture, et des moyens pour ajouter une charge correspondante dans la capacité d'ajustement de manière à augmenter ou diminuer la tension aux bornes de la capacité d'ajustement en fonction de la tension analogique du circuit de lecture.

Cette capacité de stockage qui sert dans la boucle de contre-réaction peut être la même que celle qui est située en sortie de l'intégrateur de courant et qui sert à maintenir une information de signal VS après la lecture d'une ligne et pendant l'adressage d'une ligne suivante. Mais elle peut être aussi une capacité auxiliaire de plus petite valeur, qui reçoit la même information VS de sortie de l'intégrateur.

On préfère que la capacité d'ajustement de sensibilité et le circuit d'ajustement correspondant soient placés dans le pixel lui-même, mais on peut aussi envisager des réalisations dans laquelle les capacités d'ajustement sont placées à l'extérieur de la matrice de pixels et organisées elles-mêmes en matrice (une capacité d'ajustement de la matrice de capacités correspondant à un pixel respectif de la matrice de pixels). Des moyens d'adressage sont alors prévus pour adresser une ligne de capacités d'ajustement en correspondance avec l'adressage d'une ligne de pixels, lors de l'utilisation du capteur.

De préférence, le circuit de contre-réaction comprend des moyens pour incrémenter, en phase d'utilisation, la tension de la capacité d'ajustement par une petite fraction (typiquement moins de 1 %) de l'écart entre la tension analogique de sortie VS du circuit de lecture et une tension de référence (Vgris) définissant une sensibilité désirée du pixel pour un éclairement moyen, de manière que la tension de la capacité d'ajustement se stabilise lentement autour d'une valeur moyenne ; cette valeur moyenne est telle que le pixel fournisse la tension de référence pour un éclairement qui est la moyenne des éclairements reçus au cours de l'utilisation. Elle est statistiquement identique pour tous les pixels.

D'autres caractéristiques et avantages de l'invention apparaîtront à la lecture de la description détaillée qui suit et qui est faite en référence aux dessins annexés dans lesquels :

- la figure 1 représente un schéma général de capteur infrarouge matriciel bolométrique ;
- la figure 2 représente le détail d'un pixel du capteur et le circuit de lecture de signal en pied de colonne ;
- la figure 3 représente la structure d'une colonne avec la boucle de contre-réaction permettant d'ajuster la sensibilité d'un pixel ;
- la figure 4 représente une variante de réalisation de la figure 3.

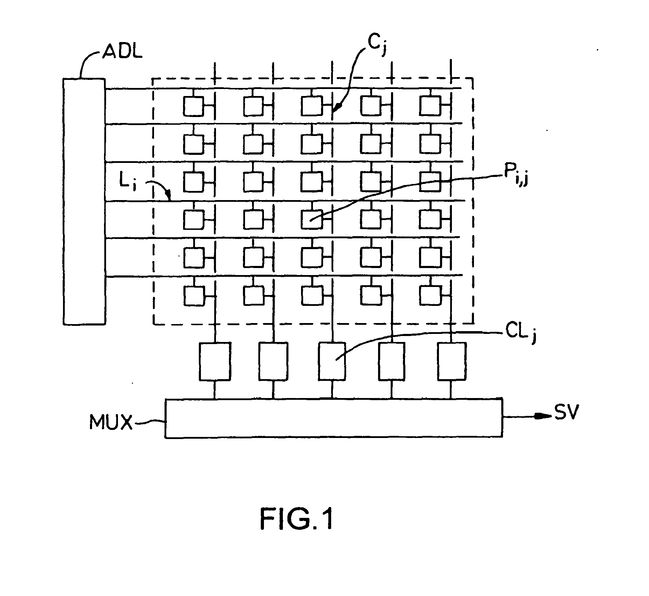

Sur la figure 1, on a représenté une vue très schématique du capteur matriciel destiné à produire un signal représentant une image thermique prise par une caméra infrarouge dont le capteur constitue l'élément sensible.

Le capteur comprend une matrice de lignes et de colonnes de pixels sensibles au rayonnement infrarouge. Un pixel Pi,j, au carrefour d'une ligne de rang i et d'une colonne de rang j, est connecté à au moins un conducteur de ligne Li reliant tous les pixels de cette ligne et il est connectable à un conducteur de colonne Cj reliant tous les pixels de cette colonne.

Le conducteur de ligne Li sert à l'adressage de la ligne de pixels ; un circuit d'adressage de ligne ADL adresse successivement les différentes lignes de la matrice et l'adressage d'une ligne de rang i provoque la connexion effective de chacun des pixels de cette ligne au conducteur de colonne correspondant à ce pixel. Au pied de chaque colonne, il y a un circuit de lecture, désigné par CLj pour la colonne de rang j, qui peut lire un signal appliqué au conducteur de colonne correspondant Cj par le pixel de la ligne adressée.

Un multiplexeur MUX reçoit les sorties de tous les circuits de lecture CLj et permet de fournir rapidement sur une sortie SV, des signaux issus de chacun des circuits de lecture. Par exemple, le multiplexeur MUX émet sur la sortie SV une succession de signaux, chaque signal correspondant à une colonne respective, dans l'ordre des colonnes ; cette succession est émise à haute cadence de manière que tous les signaux qui ont été produits à la fin de l'adressage d'une ligne de la matrice soient émis sur la sortie SV pendant la durée d'adressage de la ligne suivante de la matrice.

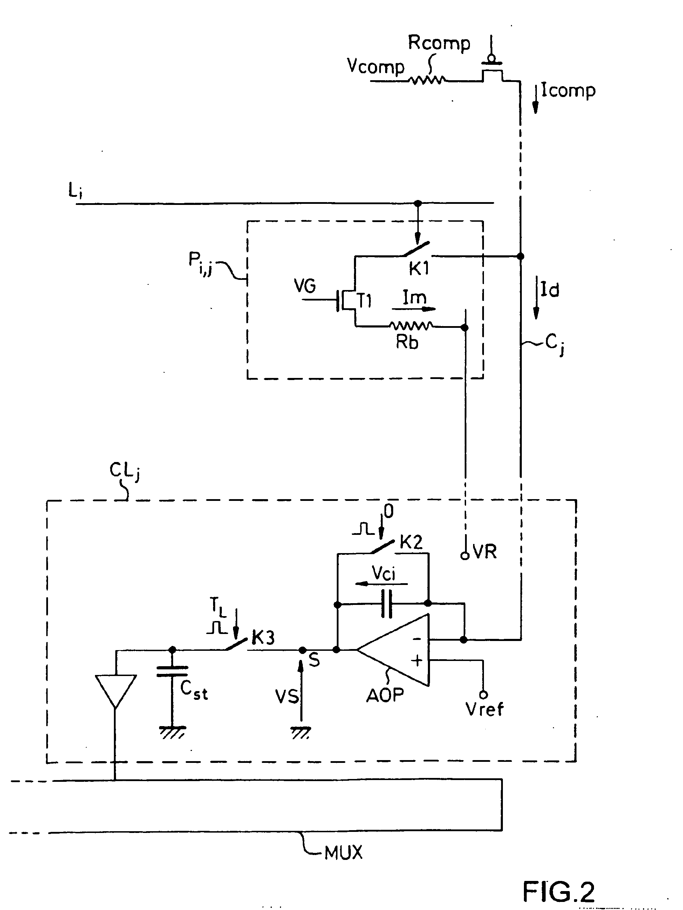

La figure 2 représente le schéma de principe élémentaire d'un pixel individuel Pi,j dont l'élément sensible est un élément bolométrique.

L'élément bolométrique est représenté par une résistance Rb dont la valeur varie en fonction de sa température et dont la température varie notamment en fonction de l'intégrale du flux de rayonnement infrarouge reçu.

Dans tout ce qui suit on utilisera la même appellation (par exemple Rb) pour désigner l'objet matériel résistif (ou capacitif) ou la valeur numérique (résistance ou capacité) de cet objet.

La résistance bolométrique Rb possède une première extrémité reliée à un potentiel de référence VR (commun à tous les pixels de la matrice) et une deuxième extrémité reliée à la source d'un transistor T1 dont la grille reçoit un potentiel VG. Le drain du transistor T1 est relié, par un interrupteur K1, au conducteur de colonne Cj. L'interrupteur K1 est commandé par le conducteur de ligne Li ; c'est lui qui établit ou interrompt la connexion entre le pixel Pi,j et le conducteur de colonne Cj ; la connexion est établie par fermeture de l'interrupteur K1 lorsque la ligne Li est adressée ; elle est interrompue par ouverture de l'interrupteur K1 lorsque la ligne n'est pas adressée.

Le transistor T1 est conducteur pendant l'adressage de la ligne, du fait que le potentiel du conducteur de colonne Cj est alors supérieur au potentiel de référence VR et du fait que le potentiel VG est choisi supérieur d'au moins une valeur VT au potentiel VR ; VT est la tension de seuil du transistor T1 et est typiquement de 0,6 volts.

Pendant l'adressage de la ligne Li, la résistance Rb recevra entre ses bornes une tension de polarisation Vpol = (VG-VT-VR) et sera donc parcourue par un courant de mesure lm tel que lm = (Vpol/Rb);

Ce courant est prélevé sur le conducteur de colonne Cj auquel la résistance est raccordée par l'intermédiaire du transistor T1 et de l'interrupteur K1.

Par ailleurs, un courant de compensation lcomp est appliqué au conducteur de colonne Cj en tête de colonne, à partir d'une source d'alimentation placée en tête de colonne. Le pied de colonne est maintenu, comme on le verra, à un potentiel de référence Vref. Si une tension prédéterminée Vcomp est appliquée par l'intermédiaire d'une résistance de valeur fixe Rcomp au conducteur de colonne, alors le courant de compensation est lcomp = (Vcomp - Vref)/Rcomp en tête de colonne. Le courant lcomp peut être produit par d'autres moyens que l'application d'une tension donnée à une résistance de valeur donnée : en particulier, il peut être fixé par une source de courant de valeur connue lcomp.

En pied de colonne, le conducteur de colonne Cj est relié au circuit de mesure CLj associé à la colonne de rang j. Ce circuit va mesurer le courant résiduel Id qui parcourt le conducteur de colonne vers le pied de colonne. Ce courant résiduel Id est la différence entre le courant lcomp et le courant de mesure lm qui est prélevé par le pixel lorsqu'il est relié au conducteur de colonne.

Le courant résiduel mesuré est donc Id = Icomp - lm, ou encore:

$$Id = Icomp - Vpol/Rb$$

Le circuit de lecture CLj comporte un intégrateur de courant qui va intégrer le courant résiduel pendant la durée $T_L$ réservée à cette mesure pour une ligne de pixels. En pratique la ligne Li est adressée pendant une durée légèrement supérieur à la durée $T_L$, avant l'adressage de la ligne suivante, mais l'intégration ne sera faite que sur la durée $T_L$ ; par exemple la durée $T_L$ est de 50 microsecondes pour une période d'adressage de ligne de 64 microsecondes. Dans ce qui suit, si on s'intéresse à une ligne, on considérera que le début de l'intégration de flux thermique est fait à un instant 0 et la fin de l'intégration est faite à un instant $T_L$.

L'intégrateur de courant comporte une capacité d'intégration de courant de valeur Cint et il fournit aux bornes de cette capacité une tension Vci proportionnelle à l'intégrale du courant résiduel Id :

$$Vci = 1/Cint \int_{(0\ \text{à}\ TL)} [Vpol/Rb\ -\ Icomp]dt.$$

A titre d'exemple, l'intégrateur comporte un amplificateur opérationnel AOP dont l'entrée non-inverseuse reçoit le potentiel de référence Vref et dont l'entrée inverseuse est reliée à la colonne Cj pour en recevoir le courant résiduel Id. La capacité Cint est connectée entre l'entrée inverseuse et la sortie de l'amplificateur opérationnel AOP. Un commutateur K2 relié entre les bornes de la capacité permet de court-circuiter la capacité d'intégration Cint et ainsi mettre à zéro la tension aux bornes de cette capacité à un instant de référence zéro définissant le début d'une nouvelle intégration dont la durée est $T_L$. Cet interrupteur K2 est donc fermé brièvement (par exemple pendant 4 microsecondes) en fin de cycle d'adressage de la ligne précédente (ou en début de cycle d'adressage de la ligne Li) et il s'ouvre à l'instant 0 définissant pour chaque ligne le début d'une période de mesure de signal. En s'ouvrant, il autorise le début de l'intégration dans la capacité.

De manière classique, du fait de la présence de l'amplificateur opérationnel AOP, à grand gain et grande impédance d'entrée, bouclé par une capacité de contre-réaction, on peut dire que le potentiel du conducteur de colonne Cj reliée à l'entrée inverseuse de l'amplificateur opérationnel reste égal au potentiel Vref appliqué à l'entrée non inverseuse. C'est pourquoi on a indiqué plus haut que le potentiel du conducteur de colonne Cj est égal au potentiel de référence Vref.

Ainsi, le potentiel VS présent sur la sortie S de l'amplificateur opérationnel à la fin de la durée d'intégration est la somme du potentiel Vref et du potentiel Vci :

$$VS = Vref + Vci,$$

ou encore

$$VS = Vref\ +\ 1/Cint \int_{(0\ \text{à}\ TL)} [Vpol/Rb\ -\ Icomp]dt$$

La sortie S de l'amplificateur est reliée par un interrupteur K3 à une capacité de stockage Cst dont la fonction est de mémoriser la valeur de la tension VS après la fin de la durée d'intégration et pendant la lecture de la ligne suivante. L'interrupteur K3 est fermé brièvement (par exemple 1 microseconde) vers la fin de cycle d'intégration, puis rouvert à l'instant $T_L$ qui marque la fin de la durée d'intégration pour une ligne. La tension aux bornes de la capacité de stockage Cst prend une valeur égale à la valeur atteinte à l'instant $T_L$ par la tension VS.

La tension aux bornes de la capacité de stockage Cst est appliquée, par l'intermédiaire d'un amplificateur tampon à grande impédance d'entrée (pour éviter une perte de charge de la capacité), à une entrée respective de rang j du multiplexeur MUX. Le multiplexeur peut transmettre un signal correspondant à cette tension à tout moment pendant l'intervalle de temps réservé à la lecture des pixels issus de la ligne Li, c'est-à-dire pendant l'intervalle de temps pendant lequel la ligne suivante de rang i+1 est adressée.

Ainsi, dans cette architecture de capteur matriciel bolométrique, le signal de mesure qui va être transmis par le multiplexeur est proportionnel à la quantité VS suivante :

$$VS = Vref + 1/Cint \int_{(0\ à\ T_L)} [Vpol/Rb - Icomp]dt$$

ou

$$VS = Vref + 1/Cint \int_{(0\ à\ T_L)} [(VG-VT-VR)/Rb - Icomp]dt$$

Le courant de compensation Icomp est de préférence choisi, en agissant sur Vcomp et Rcomp, pour que le courant résiduel Id soit nul à une température de référence. Cette température de référence est par exemple une température ambiante de 300°K. Ainsi, à température ambiante et pour un pixel idéal qui aurait une résistance nominale désirée Rb0 à 300°K, on choisit les paramètres VG, VR et Icomp tels que (VG-VT-VR)/Rb0 = Icomp. VT est fixé par la technologie. VG et VR, ainsi que Icomp peuvent être choisis librement. Ainsi, ce pixel idéal fournira un signal en tension VS centré autour de Vref : supérieur à Vref lorsqu'il est exposé à une température supérieure à 300°K et inférieur à Vref lorsqu'il est exposé à une température inférieure.

Mais, comme on l'a dit plus haut, Rb est une quantité à forte dispersion technologique, et peut avoir à la température de référence des valeurs très différentes de la valeur nominale Rb0 pour les différents pixels de la matrice.

Or l'architecture de capteur dont on parle ici est une architecture à adressage ligne par ligne : le pixel n'est alimenté par un courant de polarisation que pendant l'adressage de la ligne (typiquement moins de 64 microsecondes). C'est pourquoi on prévoit un courant de polarisation relativement important dans la résistance Rb à ce moment là. L'influence de ce courant est alors considérable par rapport aux variations de ce courant engendrées par l'exposition du pixel au rayonnement infrarouge. Par exemple, la valeur nominale de la résistance varie de 15% en raison des dispersions technologiques, alors que la résistance ne varie que de 1% en fonction de l'éclairement reçu, entre un éclairement minimal et un éclairement maximal. L'obtention sur le capteur d'une image ayant une réelle signification par rapport à l'éclairement reçu est donc extrêmement perturbée par cette dispersion.

On propose selon l'invention de corriger individuellement chaque pixel à l'aide d'un circuit analogique d'ajustement de sensibilité propre à ce pixel, ce circuit d'ajustement réagissant à une valeur de tension d'ajustement stockée sur une capacité d'ajustement. Cette valeur de tension est fournie par un circuit de contre-réaction recevant une information du circuit de mesure en pied de colonne et fournissant une charge à la capacité d'ajustement propre au pixel ; la valeur d'ajustement peut être fournie notamment (mais pas obligatoirement) lors d'une phase de calibrage consistant en un éclairement uniforme de la matrice du capteur (de préférence un éclairement à la température de référence, par exemple 300°K).

Ainsi, un pixel Pi,j ayant une résistance Rbij0 à la température de référence permettra d'établir, par la boucle de contre-réaction, une tension sur une capacité d'ajustement qui lui est propre . La valeur de la tension stockée sur cette capacité sera telle que pour un éclairement par un flux thermique (ou une température) de référence, la sortie du circuit de mesure en pied de colonne ait une valeur prédéterminée, la même pour tous les pixels. Le circuit de contre réaction est auto-correcteur et la tension sur la capacité d'ajustement s'établit progressivement de telle manière que tous les pixels fournissent au bout d'un certain temps le même signal de mesure pour le flux thermique de référence bien que leurs résistances Rbij0 soient différentes les unes des autres à la température engendrée par ce flux.

Selon l'invention, on propose que le circuit d'ajustement propre au pixel agisse sur l'un des paramètres suivants :

VG, Vref, $T_L$, Icomp, de préférence VG qui définit la tension de polarisation de la résistance bolométrique pendant l'adressage de la ligne.

Selon un mode de réalisation non revendiqué, le circuit d'ajustement avec la capacité d'ajustement qui le commande ne sont pas nécessairement localisés dans le pixel lui-même, mais les réalisations dans lesquelles la capacité d'ajustement est localisée dans le pixel sont avantageuses par rapport à celles qui auraient une capacité d'ajustement située en dehors du pixel.

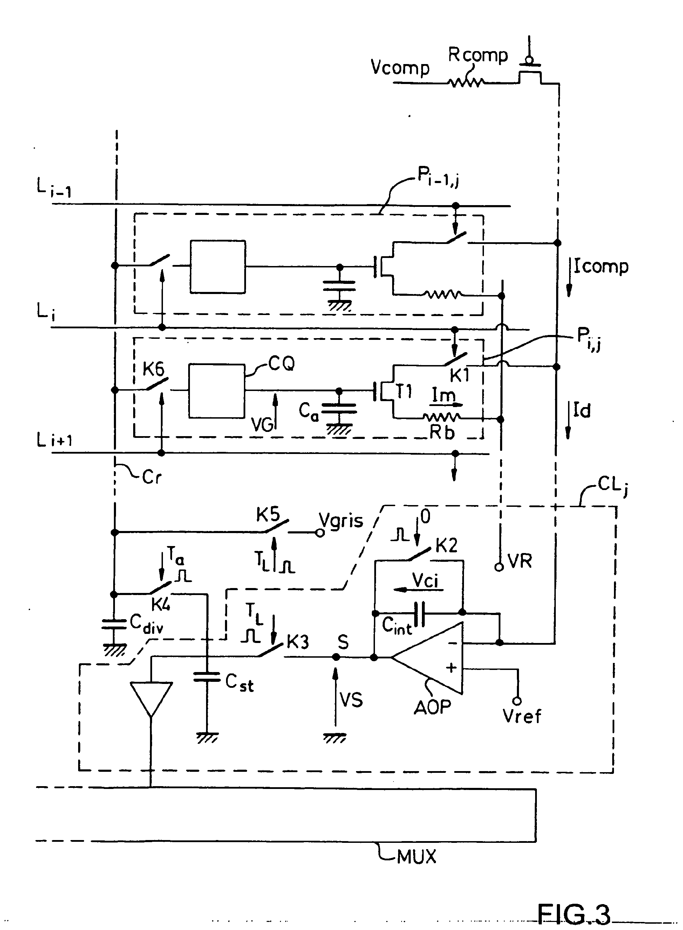

A ce sujet, une réalisation dans laquelle on agit sur la tension VG dans chaque pixel est particulièrement avantageuse. Et c'est celle qu'on va maintenant décrire en référence à la figure 3. La constitution globale du réseau matriciel est la même qu'aux figures 1 et 2, et on indiquera ci-après les particularités ajoutées par l'invention. Les éléments qui portent les mêmes références qu'à la figure 2 sont les mêmes qu'à la figure 2.

La capacité d'ajustement propre au pixel et localisée dans le pixel est désignée par Ca. Le circuit d'ajustement est simplement constitué par le transistor T1 déjà présent à la figure 2 ; il joue le rôle d'un circuit d'ajustement parce qu'il est monté en suiveur et que la tension sur sa source suit directement, à une chute de tension de seuil VT près, la tension présente sur sa grille. Cette tension de grille est maintenant la tension d'ajustement présente sur la capacité d'ajustement Ca montée entre la grille du transistor T1 et une masse au potentiel zéro. La capacité grille-substrat du transistor T1 peut d'ailleurs être considérée comme étant une partie de la capacité d'ajustement Ca.

La tension d'ajustement, ou tension de grille VG du transistor suiveur, détermine directement la tension de polarisation de la résistance bolométrique comme on l'a expliqué précédemment :

Vpol = VG-VT-VR, VG étant maintenant une tension individuellement variable pour chaque pixel.

Sur la figure 3, on a représenté deux pixels voisins Pi,j et Pi-1,j, chacun comportant une résistance bolométrique polarisée au moyen d'un transistor suiveur ; la résistance bolométrique Rb est reliée entre la source du transistor suiveur et un point au potentiel de référence VR commun à tous les pixels. La tension de seuil VT du transistor peut être considérée comme identique pour tous les pixels.

Le circuit de contre-réaction qui sert à établir une tension d'ajustement appropriée sur la capacité Ca comprend un circuit d'incrémentation de charges CQ dont la fonction est d'ajouter sur la capacité d'ajustement, après la lecture d'une ligne, une quantité de charges signée d'autant plus importante que la sensibilité du pixel est différente de la sensibilité nominale désirée pour tous les pixels. La quantité de charges est positive ou négative et vient s'ajouter à la quantité de charges précédemment stockée sur la capacité d'ajustement. Le signe de la quantité de charges ainsi ajoutée est tel que la sensibilité du pixel tende à se rapprocher de la sensibilité nominale désirée.

Le circuit d'incrémentation CQ utilise comme commande, pour déterminer la quantité de charges à ajouter ou à soustraire, le niveau de tension VS recueilli par le circuit de lecture CLj à la fin de la lecture de la ligne, donc après l'instant $T_L$ qui définit la fin de la lecture. C'est en effet ce niveau qui représente, pour un éclairement donné, la sensibilité du pixel.

Cependant, pour établir progressivement et non pas instantanément un niveau de tension d'ajustement sur la capacité Ca, on procède de préférence par très petites incrémentations de la manière suivante : le niveau de tension VS qui est stocké dans la capacité de stockage Cst à la fin de la lecture de la ligne, est appliqué à une capacité de plus grande taille Cdiv préchargée à un niveau de tension moyen qu'on explicitera plus loin et qu'on appellera ici Vgris. Vgris est de préférence égal à Vref. La précharge est de préférence effectuée pendant un intervalle de temps bref à la fin de la durée $T_L$ d'intégration de courant. Pendant cet intervalle de temps, un commutateur K5 relie la capacité Cdiv à une référence de tension Vgris. La commande du commutateur K5 est en pratique simultanée avec la commande du commutateur K3.

Après la précharge de la capacité Cdiv, on applique à cette capacité la tension présente aux bornes de la capacité de stockage Cst, tension qui représente la tension de sortie VS en fin de lecture du pixel. Un commutateur K4 sert à relier la capacité Cst à la capacité Cdiv. Le commutateur K4 est fermé brièvement, et cette fermeture ne peut être effectuée qu'après la réouverture du commutateur K5.

Le rôle de la capacité Cdiv est de constituer une sorte de diviseur capacitif tel que la tension aux bornes de la capacité Cdiv, initialement à Vgris du fait de la précharge, s'incrémente d'une fraction de la différence entre VS et Vgris. Plus précisément, la tension passe de Vgris à

$$Vgris + (VS - Vgris).Cst/(Cst+Cdiv)$$

Ainsi, si la tension VS est égale à Vgris, il n'y a pas d'augmentation ou diminution de la tension sur la capacité préchargée Cdiv. Mais si la tension VS est supérieure ou inférieure à Vgris, la tension aux bornes de la capacité Cdiv varie légèrement, d'une fraction de la différence entre VS et Vgris.

La tension aux bornes de la capacité Cdiv est alors appliquée comme tension de commande au circuit d'incrémentation de charges CQ pour modifier la charge de la capacité d'ajustement Ca en proportion de la différence (VS-Vgris).Cst/(Cst+Cdiv), c'est-à-dire en proportion de la petite incrémentation ou décrémentation de tension qui vient d'être faite sur la capacité Cdiv. Sur la figure 3, le circuit d'incrémentation de charges est représenté comme étant localisé géographiquement dans chaque pixel. On peut envisager aussi un circuit d'incrémentation commun à tous les pixels.

La variation de charge de la capacité Ca est faite bien entendu dans un sens tendant à ramener la sensibilité du pixel à la valeur nominale désirée.

Le calibrage de sensibilité du pixel se fait donc de préférence en mesurant la tension analogique VS en permanence et en ajoutant à la capacité d'ajustement une petite quantité de charges telle que le circuit d'ajustement modifie d'un pourcentage faible la différence de tension VS-Vgris fournie par le pixel pour un éclairement donné, Vgris étant une valeur de tension de référence correspondant à la tension analogique fournie par un pixel de sensibilité désirée pour un éclairement moyen. Par pourcentage faible, on comprendra un pourcentage inférieur à 10% si le calibrage est fait dans une phase de calibrage spécifique à partir d'une source d'éclairement uniforme, et un pourcentage inférieur ou égal à 1 % si le calibrage est fait pendant l'utilisation elle-même sans source d'éclairement uniforme.

La capacité Cdiv doit être reliée au circuit d'incrémentation de charges du pixel dont la tension VS vient d'être mesurée. Pour cela, la capacité Cdiv peut être reliée au pixel par un conducteur de retour Cr qui est commun à toute la colonne de pixels (colonne de rang j).

Le circuit d'incrémentation CQ au pixel Pi,j ne doit effectuer un transfert de charges sur la capacité Ca que pendant que le conducteur Cr transporte une information de tension relative à ce pixel et non pas pendant qu'il transporte une information relative à une mesure sur un autre pixel. C'est pourquoi un commutateur K6 relie l'entrée du circuit CQ au conducteur Cr, et ce commutateur est fermé seulement pendant la durée d'adressage d'une ligne, après quoi il est ouvert.

Bien entendu, si c'est le pixel Pi,j qui donne lieu à une tension (VS-Vgris).Cst/(Cst+Cdiv) sur le conducteur Cr, il faut faire attention que ce soit le pixel Pi,j et non pas le pixel précédent ou le pixel suivant qui reçoive cette tension à la fin de l'adressage de la ligne de rang i.

Selon le séquencement des signaux, on a deux hypothèses possibles :

- dans une première hypothèse l'adressage de la ligne Li se termine au temps $T_L$ qui définit la fin de l'intégration du courant dans la capacité Cint ; l'adressage d'une nouvelle ligne de rang i+1 commence à ce moment ; or, la tension (VS-Vgris).Cst/(Cst+Cdiv) n'est disponible sur le conducteur de retour Cr qu'après la durée $T_L$ ; dans cette hypothèse, comme cela est représenté sur la figure 3, l'interrupteur K6 correspondant est fermé par la commande d'adressage de la ligne de rang i+1 et non pas par la commande d'adressage de la ligne de rang i ; ainsi, c'est bien le pixel Pi, j qui reçoit l'information établie à partir de la lecture de ce même pixel bien que l'adressage de la ligne suivante ait déjà commencé ;
- dans une deuxième hypothèse, on prend le temps d'appliquer la tension sur le conducteur de retour Cr avant de passer à l'adressage de la ligne suivante, de sorte que le commutateur K6 peut alors être commandé par le conducteur de ligne Li qui correspond au pixel Pi,j et non par le conducteur de rang i+1 ; dans cette deuxième hypothèse, il est préférable de prévoir une capacité de stockage auxiliaire C'st pour servir à constituer la tension sur le conducteur de retour Cr, la capacité C'st recevant la même tension VS que la capacité Cst.

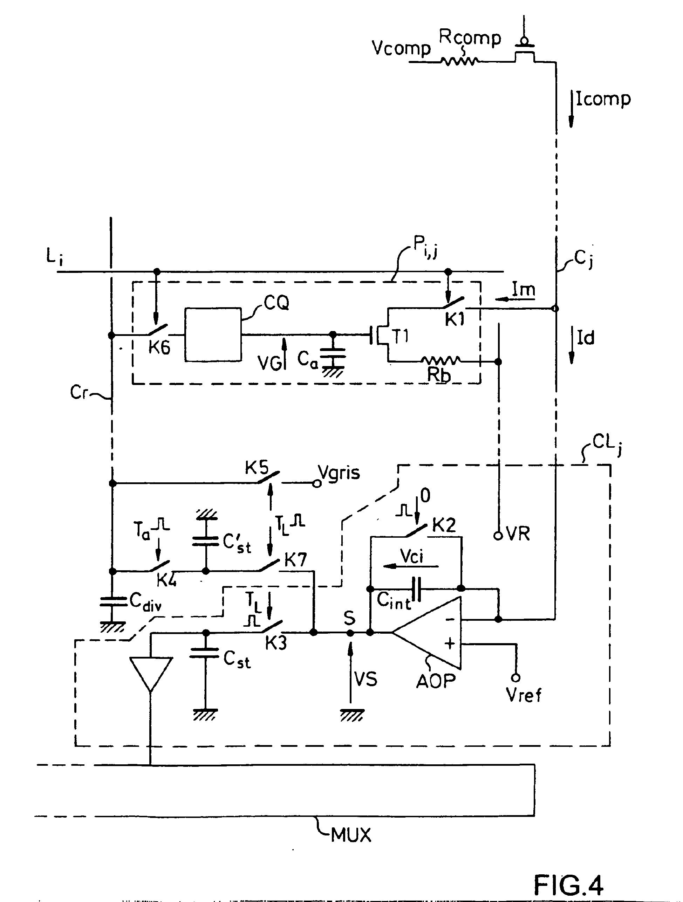

La première hypothèse est utilisée dans le schéma de la figure 3 ; la deuxième hypothèse est utilisée dans le schéma de la figure 4. Sur la figure 4, les éléments communs avec ceux de la figure 3 sont désignés par les mêmes références.

Sur la figure 3, la boucle de contre-réaction comprend donc, entre la sortie de l'intégrateur de courant et la capacité d'ajustement :

- la capacité de stockage Cst et l'interrupteur K3, qui font tous deux partie en même temps du circuit de lecture CLj ;
- la capacité Cdiv, l'interrupteur K5 qui la réinitialise à la tension Vgris, l'interrupteur K4 qui permet de modifier sa tension après initialisation, le conducteur de retour Cr (un par colonne) qui transmet une information vers le pixel concerné,
- l'interrupteur K6 et le circuit d'incrémentation de charge CQ, localisés géographiquement dans le pixel.

Sur la figure 4, la liaison entre le conducteur de retour Cr et le pixel Pi,j est faite par un commutateur K6 qui est fermé pendant l'adressage de la ligne Li qui correspond au pixel Pi,j et non par l'adressage de la ligne Li+1 qui correspond au pixel Pi+1,j. De plus, alors qu'à la figure 3 la capacité Cst jouait un double rôle de stockage de la tension VS à destination du multiplexeur et de commande du niveau de tension de la capacité Cdiv, ces deux rôles sont maintenant séparés, le deuxième rôle étant attribué à la capacité auxiliaire C'st.

La capacité C'st peut être chargée à la tension VS pendant un bref instant à la fin de la durée $T_L$ grâce à un commutateur K7 connecté entre la sortie de l'amplificateur AOP et la capacité C'st. Le commutateur K7 est actionné en même temps que le commutateur K3 et le commutateur K5. Le commutateur K4 n'est plus relié entre la capacité Cst et la capacité Cdiv mais entre la capacité C'st et la capacité Cdiv. La capacité Cst peut alors avoir une valeur beaucoup plus forte que la capacité C'st. A titre d'exemple, Cst est de 1 picofarad et C'st de 0,1 picofarad dans le schéma de la figure 4, alors que Cst est plutôt de 0,1 picofarad dans le schéma de la figure 3 pour pouvoir remplir à la fois le rôle principal de stockage du niveau du pixel en utilisation normale, et le rôle auxiliaire d'élaboration de la tension d'ajustement sur le conducteur de retour Cr.

Dans le schéma de la figure 4, le circuit de contre-réaction servant à établir la tension d'ajustement VG sur la capacité Ca comporte essentiellement :

- une capacité supplémentaire C'st et l'interrupteur K7 qui permet de lui appliquer la tension de sortie VS issue du pixel ;
- la capacité Cdiv, l'interrupteur K5 qui la réinitialise à la tension Vgris, l'interrupteur K4 qui permet de modifier sa tension après initialisation, le conducteur de retour Cr (un par colonne) qui transmet une information vers le pixel concerné,
- l'interrupteur K6 et le circuit d'incrémentation de charge CQ localisés dans le pixel.

Que ce soit par le schéma de la figure 3 ou le schéma de la figure 4, on comprend qu'au cours d'une phase de calibrage qui se poursuit sur quelques dizaines d'images avec un éclairement uniforme, tous les pixels vont progressivement fournir un même niveau de tension VS égal à Vgris, au fur et à mesure que leur capacité d'ajustement Ca va progressivement se charger ou se décharger pour compenser l'écart constaté entre VS et Vgris. Plus le rapport de division capacitive est Cst/(Cst+Cdiv) ou C'st/(C'st+Cdiv) est petit, plus la constante de temps d'établissement de la tension d'ajustement est longue.

La tension Vgris est choisie en fonction de la constitution du circuit d'incrémentation de charges CQ. En effet, ce dernier a pour fonction de convertir une tension (VS-Vgris).Cst/(Cst+Cdiv) en une quantité de charges dQ proportionnelle à (VS-Vgris). Par exemple, en admettant que ce circuit de conversion d'incrémentation de charges, qui effectue une conversion tension/charge, soit constitué de manière symétrique et alimenté entre une tension d'alimentation basse à 0 volt et une tension d'alimentation haute à Vdd, on comprend qu'il pourra facilement effectuer une création de quantité de charges proportionnelle à VS-Vgris si Vgris est choisi égal à Vdd/2. Si c'est le cas (mais ce n'est pas obligatoire), on choisira Vgris = Vdd/2 et le commutateur K5 sera relié à une tension Vdd/2 obtenue par exemple par un pont diviseur résistif placé entre les potentiels 0 et Vdd.

Dans la description des figures 3 et 4 on voit que l'ajustement de sensibilité du pixel se fait par ajustement individuel de la tension VG du transistor de commande de la résistance bolométrique, et cet ajustement revient à ajuster la polarisation Vpol appliquée au pixel pendant la lecture de la ligne puisque Vpol = VG - VT - VR ; VT et VR sont des quantités fixes dans ces réalisations.

En variante, on peut également prévoir que la tension d'ajustement sert à commander la valeur du courant de compensation Icomp appliqué au conducteur de colonne pendant l'adressage de la ligne correspondant au rang i du pixel concerné. On peut par exemple prévoir dans le pixel une dérivation vers la masse d'un courant commandé par la tension d'ajustement obtenue par le circuit de contre-réaction.

Egalement, on peut prévoir que la tension de référence Vref est modifiée par le circuit de contre-réaction, et ceci pour chaque pixel. Mais on comprend que dans ce cas le circuit de contre-réaction ne revient pas dans le pixel puisque la tension de Vref n'est pas amenée géographiquement dans le pixel. Cela veut dire qu'il faut prévoir hors de la matrice du capteur proprement dit un réseau de capacités d'ajustement capables d'agir sur la tension de référence Vref de la même manière que la capacité d'ajustement Ca des figures 3 et 4 agit sur la tension Vpol. Ce réseau de capacités ajustables est adressable en même temps que les lignes de pixels pour pouvoir faire correspondre une capacité ajustable spécifique à un pixel donné, aussi bien pendant une opération de calibrage que pendant l'utilisation normale si ces deux opérations sont distinctes.

Une autre possibilité consiste à agir sur la durée d'intégration $T_L$ pour que chaque pixel ait une durée d'intégration ajustée pour que la sensibilité apparente du pixel pour un éclairement de référence soit la même pour tous les pixels. En effet, le niveau de signal VS dépend directement, comme on l'a vu de la durée d'intégration $T_L$. Là encore, il faut prévoir un réseau de capacités ajustables extérieures aux pixels, adressables en même temps que les lignes de la matrice de bolomètres, chaque capacité permettant d'agir sur le circuit de lecture CLj pour régler un temps d'intégration spécifique, pour chaque ligne adressée (et bien sûr aussi pour chaque colonne considérée pendant l'adressage de cette ligne).

Enfin, il faut rappeler qu'une phase de calibrage avec un écran de luminance thermique de référence n'est pas obligatoire et que le calibrage peut consister simplement à laisser la tension d'ajustement prendre progressivement une valeur stable correspondant à une même valeur moyenne de sensibilité pour tous les pixels. La méthode récursive indiquée ci-dessus, par laquelle on ajoute un petit incrément de charge signé à la capacité d'ajustement lorsque le pixel fournit un signal différent de la référence moyenne Vgris, conduit en effet progressivement à une stabilisation de tous les pixels autour d'une sensibilité moyenne dès lors qu'on considère que, sur un grand nombre d'images, tous les pixels doivent voir une même distribution statistique de luminances thermiques. Si c'est ce mode de calibrage automatique qui est utilisé, la constante de temps doit être très grande (plusieurs centaines d'images, c'est-à-dire plusieurs secondes au moins) et par conséquent, le rapport de division capacitive Cst/(Cst+Cdiv) ou C'st/(C'st+Cdiv) doit être très petit (de préférence inférieur ou égale à 0,01). C'est en effet la condition pour que chaque nouvel éclairement d'un pixel ne modifie que très peu la tension d'ajustement VG stockée sur la capacité Ca.

**EP 2 059 030 B1**

Si un mode mixte est adopté, c'est-à-dire une phase de calibrage initiale avec exposition de toute la matrice à un flux thermique uniforme suivie d'une phase d'utilisation avec auto-correction permanente, il faut de préférence prévoir des moyens pour modifier la constante de temps entre les deux phases (plus courte en calibrage, par exemple une durée de 10 à 50 images, plus longue en utilisation, par exemple 100 à 500 images ) ; cette modification peut se faire par remplacement de la capacité C'st par une autre capacité de valeur différente).

Si le mode de calibrage par exposition à un flux thermique uniforme de référence est le seul utilisé (avec une constante de temps de préférence assez courte (inférieure à une seconde, soit quelques dizaines d'images), alors il faut prévoir des moyens (non représentés aux figures 3 et 4) pour autoriser le fonctionnement de la boucle de contre-réaction en phase de calibrage et l'interdire ensuite en phase d'utilisation. La tension d'ajustement élaborée pendant la phase de calibrage est conservée sur la capacité Ca pendant la phase d'utilisation jusqu'à une nouvelle phase de calibrage.

**Revendications**

1. Capteur d'image thermique matriciel comportant une matrice de lignes et colonnes de pixels, adressable ligne par ligne, et une rangée de circuits de lecture de signal (CLj) associés chacun à une colonne de pixels pour recevoir successivement, au fur et à mesure de l'adressage des lignes, un courant issu d'un pixel (Pi,j) de la colonne, chaque pixel de la matrice comportant une résistance bolométrique dont la valeur Rb dépend du flux thermique reçu par le pixel, cette résistance étant polarisée par une tension de polarisation de valeur Vpol, le circuit de lecture comprenant un intégrateur pour intégrer dans une capacité d'intégration la différence entre le courant Vpol/Rb parcourant la résistance bolométrique et un courant de compensation, le capteur étant **caractérisé en ce qu'**il comporte, pour chaque colonne de la matrice, une boucle de contre-réaction (K4, Cdiv, Cr, K6, CQ) partant de la capacité d'intégration du circuit de lecture commun aux pixels de la colonne et aboutissant à une capacité d'ajustement (Ca) spécifique à chaque pixel et localisée dans le pixel, pour stocker sur cette capacité d'ajustement une tension (VG) d'ajustement propre au pixel, et un circuit analogique d'ajustement de sensibilité (T1) localisé dans le pixel agissant en réponse à cette tension d'ajustement pour modifier, lors de la lecture de la ligne à laquelle appartient le pixel, la tension de polarisation de la résistance bolométrique, la boucle de contre-réaction comportant une capacité de stockage (Cs, C'st) pour stocker la tension analogique VS fournie par le circuit de lecture (CLj), une capacité de référence commune aux pixels de la colonne considérée (Cdiv), des moyens pour précharger cette capacité de référence à une valeur de tension de référence déterminée (Vgris), des moyens pour ajouter à cette capacité de référence une charge représentative de l'écart entre cette tension déterminée et la tension analogique (VS) fournie par le circuit de lecture, et des moyens (CQ) pour ajouter à la capacité d'ajustement une quantité de charges signée en fonction de la tension analogique aux bornes de la capacité de référence.

2. Capteur d'image thermique matriciel selon la revendication 1, **caractérisé en ce que** le circuit d'ajustement de sensibilité comprend un transistor (T1) monté en suiveur de tension, dont la source est reliée à la résistance bolométrique et dont la grille est reliée à la capacité d'ajustement.

3. Capteur d'image thermique matriciel selon la revendication 2, **caractérisé en ce que** la résistance bolométrique est reliée entre la source du transistor et un potentiel fixe (VR) commun à tous les pixels de la matrice.

4. Capteur d'image thermique matriciel selon l'une des revendications 2 et 3, **caractérisé en ce que** le drain du transistor est relié, par un interrupteur d'adressage de ligne, à un conducteur de colonne (Cr) auquel est appliqué le courant de compensation (Icomp).

5. Capteur d'image thermique matriciel selon l'une des revendications 1 à 4, **caractérisé en ce que** la capacité de référence (Cdiv) est située en pied de colonne et est reliée par un conducteur de retour (Cr) aux pixels de la colonne.

6. Capteur d'image thermique matriciel selon l'une des revendications 1 à 5, **caractérisé en ce que** la capacité de stockage est une capacité principale de stockage (Cst) servant à maintenir une information de signal VS après la lecture d'une ligne et avant l'adressage d'une ligne suivante.

7. Capteur d'image thermique matriciel selon l'une des revendications 1 à 6, **caractérisé en ce que** la capacité de stockage est une capacité auxiliaire (C'st), servant à recevoir une tension identique à celle qui est appliquée à une capacité principale de stockage servant à maintenir une information de signal VS après la lecture d'une ligne et pendant l'adressage d'une ligne suivante.

8. Capteur d'image thermique selon l'une des revendications 1 à 7, **caractérisé en ce qu'**il comporte des moyens pour autoriser le fonctionnement du circuit de contre-réaction pendant une phase de calibrage et pour l'interdire pendant une phase d'utilisation suivant une phase de calibrage.

9. Capteur d'image thermique selon l'une des revendications 1 à 8, **caractérisé en ce que** les moyens (CQ) pour ajouter une quantité de charges signée sont adaptés pour modifier, en phase d'utilisation, la tension de la capacité d'ajustement d'un pourcentage inférieur à 10% de l'écart entre la tension de sortie VS du circuit de lecture et une tension de référence (Vgris) définissant une sensibilité désirée du pixel pour un éclairement moyen, de manière que la tension de la capacité d'ajustement se stabilise lentement à une valeur telle que le pixel fournisse la tension de référence pour un éclairement qui est la moyenne des éclairements reçus au cours de l'utilisation.

10. Procédé de réduction de bruit spatial fixe dans un capteur d'image thermique matriciel, selon la revendication 1, le procédé étant **caractérisé en ce que**

   - on mesure la tension analogique VS issue d'un pixel,
   - on ajoute à la capacité d'ajustement (Ca) spécifique au pixel et localisée dans le pixel une quantité de charges signée dépendant du niveau de la tension mesurée,
   - on commande, à partir de la tension stockée sur la capacité d'ajustement, le circuit d'ajustement localisé dans le pixel et agissant, lors de la lecture de la ligne à laquelle appartient le pixel, sur la tension de polarisation Vpol.

11. Procédé selon la revendication 10, **caractérisé en ce que** la tension analogique VS est mesurée au cours d'une phase de calibrage pendant laquelle la matrice est éclairée par un éclairement uniforme de référence.

12. Procédé selon la revendication 11, **caractérisé en ce que** la tension analogique VS est mesurée cycliquement pendant la phase de calibrage et la quantité de charges ajoutée à la capacité d'ajustement est une petite quantité de charges telle que le circuit d'ajustement modifie d'un pourcentage inférieur à 10% la différence de tension VS-Vgris fournie par le pixel pour un éclairement donné, Vgris étant une valeur de tension de référence correspondant à la tension analogique fournie par un pixel de sensibilité désirée pour l'éclairement de référence.

13. Procédé selon l'une des revendications 10 à 12, **caractérisé en ce que** la tension analogique VS est mesurée cycliquement pendant l'utilisation normale du capteur et la quantité de charges ajoutée à la capacité d'ajustement est une petite quantité de charges telle que le circuit d'ajustement modifie d'un pourcentage inférieur à 1 % la différence de tension VS-Vgris fournie par le pixel pour un éclairement donné, Vgris étant une valeur de tension de référence correspondant à la tension analogique fournie par un pixel de sensibilité désirée pour un éclairement moyen.

## Claims

1. Matrix thermal image sensor comprising a matrix of lines and columns of pixels, that can be addressed line by line, and a row of signal read circuits (CLj) each associated with a column of pixels in order to receive successively, as the lines are addressed, a current originating from a pixel (Pi,j) of the column, each pixel of the matrix comprising a bolometric resistor whose value Rb depends on the thermal flow received by the pixel, this resistor being biased by a bias voltage of value Vpol, the read circuit comprising an integrating circuit in order to integrate into an integration capacitor the difference between the current Vpol/Rb travelling through the bolometric resistor, and a compensation current, the sensor being **characterized in that** it comprises, for each column of the matrix, a feedback loop (K4, Cdiv, Cr, K6, CQ) starting from the integration capacitor of the read circuit common to the pixels of the column and ending at a trimmer capacitor (Ca) specific to each pixel and located in the pixel, in order to store in this trimmer capacitor a trimmer voltage (VG) specific to the pixel, and an analogue sensitivity trimmer circuit (T1) located in the pixel acting in response to this trimmer voltage in order to modify, when the line to which the pixel belongs is read, the bias voltage of the bolometric resistor, the feedback loop comprising a storage capacitor (Cs, C'st) for storing the analogue voltage VS supplied by the read circuit (CLj), a reference capacitor common to the pixels of the column in question (Cdiv), means for precharging this reference capacitor at a determined reference voltage value (Vgris), means for adding to this reference capacitor a charge representative of the difference between this determined voltage and the analogue voltage (VS) supplied by the read circuit, and means (CQ) for adding a signed charge amount to the trimmer capacitor depending on the analogue voltage at the terminals of the reference capacitor.

2. Matrix thermal image sensor according to Claim 1, **characterized in that** the sensitivity trimmer circuit comprises a transistor (T1) mounted as a voltage follower, whose source is connected to the bolometric resistor and whose grid is connected to the trimmer capacitor.

3. Matrix thermal image sensor according to Claim 2, **characterized in that** the bolometric resistor is connected between the source of the transistor and a fixed potential (VR) common to all the pixels of the matrix.

4. Matrix thermal image sensor according to one of Claims 2 and 3, **characterized in that** the drain of the transistor is connected, via a line address switch, to a column conductor (Cr) to which the compensation current (Icomp) is applied.

5. Matrix thermal image sensor according to one of Claims 1 to 4, **characterized in that** the reference capacitor (Cdiv) is situated at the foot of a column and is connected via a return conductor (Cr) to the pixels of the column.

6. Matrix thermal image sensor according to one of Claims 1 to 5, **characterized in that** the storage capacitor is a main storage capacitor (Cst) used to maintain an item of signal information VS after the reading of a line and before the addressing of a subsequent line.

7. Matrix thermal image sensor according to one of Claims 1 to 6, **characterized in that** the storage capacitor is an auxiliary capacitor (C'st), used to receive a voltage that is identical to that which is applied to a main storage capacitor used to maintain an item of signal information VS after the reading of a line and during the addressing of a subsequent line.

8. Thermal image sensor according to one of Claims 1 to 7, **characterized in that** it comprises means for allowing the operation of the feedback circuit during a calibration phase and in order to prevent it during a phase of use following a calibration phase.

9. Thermal image sensor according to one of Claims 1 to 8, **characterized in that** the means (CQ) for adding a signed charge amount are adapted to modify, in the phase of use, the voltage of the trimmer capacitor by a percentage smaller than 10% of the difference between the output voltage VS of the read circuit and a reference voltage (Vgris) defining a desired sensitivity of the pixel for an average illuminance, so that the voltage of the trimmer capacitor stabilizes slowly to a value such that the pixel supplies the reference voltage for an illuminance which is the average of the illuminances received during use.

10. Method for reducing fixed spatial noise in a matrix thermal image sensor according to claim 1, the method being **characterized in that**

- the analogue voltage VS originating from a pixel is measured,
- a quantity of charges signed depending on the level of the measured voltage is added to the trimmer capacitor (Ca) specific to the pixel and located in the pixel,
- based on the voltage stored on the trimmer capacitor, a command is given to the trimmer circuit located in the pixel and acting, when the line to which the pixel belongs is read, on the bias voltage Vpol.

11. Method according to Claim 10, **characterized in that** the analogue voltage VS is measured during a calibration phase during which the matrix is illuminated by a uniform reference illuminance.

12. Method according to Claim 11, **characterized in that** the analogue voltage VS is measured cyclically during the calibration phase and the quantity of charges added to the trimmer capacitor is a small quantity of charges such that the trimmer circuit modifies by a percentage less than 10% the voltage difference VS-Vgris supplied by the pixel for a given illuminance, Vgris being a reference voltage value corresponding to the analogue voltage supplied by a pixel of desired sensitivity for the reference illuminance.

13. Method according to one of Claims 10 to 12, **characterized in that** the analogue voltage VS is measured cyclically during the normal use of the sensor and the quantity of charges added to the trimmer capacitor is a small quantity of charges such that the trimmer circuit modifies by a percentage less than 1% the voltage difference VS-Vgris supplied by the pixel for a given illuminance, Vgris being a reference voltage value corresponding to the analogue voltage supplied by a pixel of desired sensitivity for an average illuminance.

**Patentansprüche**

1. Thermischer Bildmatrixsensor, der Folgendes umfasst: eine Zeilen- und Spaltenmatrix von Pixeln, die zeilenweise adressierbar sind, und eine Reihe von Signalleseschaltungen (CLj), die jeweils einer Pixelspalte zugeordnet sind, um nacheinander, mit fortschreitender Adressierung der Zeilen, einen von einem Pixel (Pi,j) der Spalte ausgehenden Strom zu empfangen, wobei jedes Pixel der Matrix einen bolometrischen Widerstand hat, dessen Wert Rb von dem vom Pixel empfangenen Wärmefluss abhängig ist, wobei dieser Widerstand durch eine Polarisationsspannung mit dem Wert Vpol polarisiert ist, wobei die Leseschaltung einen Integrator zum Integrieren der Differenz zwischen dem durch den bolometrischen Widerstand fließenden Strom Vpol/Rb und einem Kompensationsstrom in einem Integrationskondensator umfasst, wobei der Sensor **dadurch gekennzeichnet ist, dass** er für jede Spalte der Matrix Folgendes umfasst: eine Rückkopplungsschleife (K4, Cdiv, Cr, K6, CQ), die vom Integrationskondensator der den Pixeln der Spalte gemeinsamen Leseschaltung zu einem für jedes Pixel spezifischen und in dem Pixel befindlichen Justagekondensator (Ca) verläuft, um in diesem Justagekondensator eine dem Pixel eigene Justagespannung (VG) zu speichern, und eine analoge Empfindlichkeitsjustageschaltung (T1), die sich in dem Pixel befindet und als Reaktion auf diese Justagespannung wirksam wird, um beim Lesen der Zeile, zu der das Pixel gehört, die Polarisationsspannung des bolometrischen Widerstands zu verändern, wobei die Rückkopplungsschleife einen Speicherkondensator (Cs, C'st) umfasst, um die von der Leseschaltung (CLj) angelegte Analogspannung VS zu speichern, einen den Pixeln der betrachteten Spalte (Cdiv) gemeinsamen Referenzkondensator, Mittel zum Vorladen dieses Referenzkondensators auf einen vorbestimmten Referenzspannungswert (Vgris), Mittel zum Hinzufügen einer Ladung zu diesem Referenzkondensator, die für die Differenz zwischen dieser vorbestimmten Spannung und der von der Leseschaltung angelegten Analogspannung (VS) repräsentativ ist, und Mittel (CQ) zum Hinzufügen einer Ladungsmenge zu dem Justagekondensator, die in Abhängigkeit von der Analogspannung an den Anschlüssen des Referenzkondensators bestimmt wird.

2. Thermischer Bildmatrixsensor nach Anspruch 1, **dadurch gekennzeichnet, dass** die Empfindlichkeitsjustageschaltung einen Spannungsfolgetransistor (T1) umfasst, dessen Source mit dem bolometrischen Widerstand verbunden ist und dessen Gate mit dem Justagekondensator verbunden ist.

3. Thermischer Bildmatrixsensor nach Anspruch 2, **dadurch gekennzeichnet, dass** der bolometrische Widerstand zwischen der Source des Transistors und einem festen Potential (VR) geschaltet ist, das allen Pixeln der Matrix gemeinsam ist.

4. Thermischer Bildmatrixsensor nach Anspruch 2 oder 3, **dadurch gekennzeichnet, dass** der Drain des Transistors über einen Zeilenadressierschalter mit einem Spaltenleiter (Cr) verbunden ist, zu dem der Kompoensationsstrom (Icomp) gespeist wird.

5. Thermischer Bildmatrixsensor nach einem der Ansprüche 1 bis 4, **dadurch gekennzeichnet, dass** sich der Referenzkondensator (Cdiv) am Fuß der Spalte befindet und über einen Rückführungsleiter (Cr) mit den Pixeln der Spalte verbunden ist.

6. Thermischer Bildmatrixsensor nach einem der Ansprüche 1 bis 5, **dadurch gekennzeichnet, dass** der Speicherkondensator ein Hauptspeicherkondensator (Cst) ist, der zum Festhalten einer Signalinformation VS nach dem Lesen einer Zeile und vor dem Adressieren einer Folgezeile dient.

7. Thermischer Bildmatrixsensor nach einem der Ansprüche 1 bis 6, **dadurch gekennzeichnet, dass** der Speicherkondensator ein Zusatzkondensator (C'st) zum Aufnehmen einer Spannung ist, die mit der identisch ist, die an einen Hauptspeicherkondensator zum Halten einer Signalinformation VS nach dem Lesen einer Zeile und beim Adressieren einer Folgezeile angelegt wird.

8. Thermischer Bildmatrixsensor nach einem der Ansprüche 1 bis 7, **dadurch gekennzeichnet, dass** er Mittel umfasst, um die Funktion der Rückkopplungsschaltung in einer Kalibrierphase zuzulassen und in einer Nutzphase nach einer Kalibrierphase zu sperren.

9. Thermischer Bildmatrixsensor nach einem der Ansprüche 1 bis 8, **dadurch gekennzeichnet, dass** die Mittel (CQ) zum Hinzufügen einer bestimmten Ladungsmenge so ausgelegt sind, dass sie in der Nutzphase die Spannung des Justagekondensators um einen Anteil von weniger als 10% der Differenz zwischen der Ausgangsspannung VS der Leseschaltung und einer Referenzspannung (Vgris) verändert, die eine gewünschte Empfindlichkeit des Pixels für eine mittlere Lichtintensität so definiert, dass sich die Spannung des Justagekondensators langsam auf einem Wert stabilisiert, bei dem das Pixel die Referenzspannung für eine Lichtintensität liefert, die der Mittelwert der im Laufe der Nutzung empfangenen Lichtintensitäten ist.

10. Verfahren zum Reduzieren von festem räumlichem Rauschen in einem thermischen Bildmatrixsensor nach Anspruch 1, wobei das Verfahren **gekennzeichnet ist durch**:

- Messen der von einem Pixel ausgegebenen Analogspannung VS,
- Hinzufügen einer bestimmten, vom Pegel der gemessenen Spannung abhängigen Ladungsmenge zu dem für das Pixel spezifischen und in dem Pixel befindlichen Justagekondensator (Ca),
- Steuern, auf der Basis der im Justagekondensator gespeicherten Spannung, der Justageschaltung in dem Pixel, die beim Lesen der Zeile, zu der das Pixel gehört, auf die Polarisationsspannung Vpol wirkt.

11. Verfahren nach Anspruch 10, **dadurch gekennzeichnet, dass** die Analogspannung VS im Laufe der Kalibrierphase gemessen wird, während der die Matrix mit einer gleichmäßigen Referenzlichtintensität beleuchtet wird.

12. Verfahren nach Anspruch 11, **dadurch gekennzeichnet, dass** die Analogspannung VS zyklisch während der Kalibrierphase gemessen wird und die dem Justagekondensator hinzugefügte Ladungsmenge eine so geringe Ladungsmenge ist, dass die Justageschaltung die von dem Pixel für eine gegebene Lichtintensität gelieferte Spannungsdifferenz VS-Vgris um einen Anteil von weniger als 10% verändert, wobei Vgris ein Referenzspannungswert ist, der der Analogspannung entspricht, die von einem Pixel mit der gewünschten Empfindlichkeit für die Referenzlichtintensität geliefert wird.

13. Verfahren nach einem der Ansprüche 10 bis 12, **dadurch gekennzeichnet, dass** die Analogspannung VS zyklisch während der normalen Nutzung des Sensors gemessen wird und die dem Justagekondensator hinzugefügte Ladungsmenge eine so geringe Ladungsmenge ist, dass die Justageschaltung die von dem Pixel für eine gegebene Lichtintensität gelieferte Spannungsdifferenz VS-Vgris um einen Anteil von weniger als 1% verändert, wobei Vgris ein Referenzspannungswert ist, der der Analogspannung entspricht, die von einem Pixel mit der gewünschten Empfindlichkeit für eine mittlere Lichtintensität geliefert wird.

ADL

$C_j$

$L_i$

$P_{i,j}$

$CL_j$

MUX

SV

FIG.1

FIG.2

FIG.3

FIG.4